# EUROPEAN PATENT SPECIFICATION

(11) **EP 4 132 731 B1**
(45) Date of publication and mention of the grant of the patent: **07.08.2024**
(21) Application number: 22706135.5
(22) Date of filing: 14.01.2022
(51) Int. Cl.: B09B 3/20, B09B 3/25, B09B 3/30, B09B 101/30, C04B 18/30, C04B 28/00

(54) **CONSTRUCTION COMPOSITE FROM THE RESIDUE OF MIXED MUNICIPAL WASTE AFTER MECHANICAL TREATMENT, PROCESS OF ITS PREPARATION AND INSTALLATION.**
BAUVERBUNDWERKSTOFF AUS DEN RÜCKSTÄNDEN GEMISCHTER SIEDLUNGSABFÄLLE NACH MECHANISCHER AUFBEREITUNG, VERFAHREN ZU DESSEN HERSTELLUNG UND EINBAU.
MATÉRIAU COMPOSITE DE CONSTRUCTION PRÉPARÉ À PARTIR DE DÉCHETS MUNICIPAUX AYANT SUBI UN PRÉ-TRAITEMENT MÉCANIQUE, PROCÉDÉ POUR SA FABRICATION ET MISE EN PLACE DUDIT MATÉRIAU.

(30) Priority: 15.06.2021 SI 202100123
(43) Date of publication of application: 15.02.2023
(73) Proprietor: Zavod za Gradbenistvo Slovenije, 1000 Ljubljana (SI)
(72) Inventor: OPRCKAL, Primoz, 8212 Velika Loka (SI); MAUKO PRANJIC, Alenka, 1230 Domzale (SI); MLADENOVIC, Ana, 4220 Skofja Loka (SI); MEZA, Sebastjan, 1000 Ljubljana (SI); ILENIC, Anja, 1000 Ljubljana (SI); SPRINZER, Mirko, 2201 Zgornja Kungota (SI)
(74) Representative: Jersan, Tatjana
(86) International application number: PCT/SI2022/050001
(87) International publication number: WO 2022/265583

(56) References cited:
- EP-A1- 3 524 699
- WO-A1-2015/160313

## Description

### TECHNICAL FIELD OF INVENTION

The invention belongs to the field of material recovery or recycling of waste for the purpose of obtaining construction composites. In the composite which is prepared according to the recipe that is the subject of this invention, the residue from the mechanical treatment of mixed municipal solid waste (MSW) - also known as the heavy fraction containing potentially hazardous substances in the form of water-soluble compounds - is converted by chemical reactions and physical immobilization mechanisms into mechanically stable construction material - composite, which is acceptable for the environment and does not present any threat to biota.

One problem solved by the invention is how to economically obtain a construction material from this waste, with its excessive content of environmentally unacceptable and/or hazardous water-soluble compounds, which is acceptable for the environment and the health of humans and other living beings and in which the leaching of potentially hazardous substances will not exceed predetermined limits.

Another problem solved by the invention is how to obtain a construction composite appropriate for the intended use in construction, i.e. for the construction of embankments and fills and for all other purposes, where the use of material with such properties is possible, from a material which, due to its heterogeneous composition and physical properties, cannot be used *per se* as a construction material and cannot be incorporated into structures in such a way as to ensure mechanical stability.

### BACKGROUND ART

The invention deals with waste - a heavy fraction, which is generated in the process of sorting, separation and extraction of various types and fractions of recyclable materials from the flow of mixed municipal solid waste in the mechanical treatment of waste. According to the European waste classification, this waste has the classification number 19 12 12 and belongs to waste from waste management facilities, more specifically to waste resulting from the mechanical treatment of waste (such as sorting, crushing, pressing, pelleting) not listed elsewhere.

The process of treatment of mixed municipal waste takes place in devices registered for this purpose. Two examples of such devices are the waste sorting plant in Snaga Maribor (SNAGA d.o.o., a company for waste management and other municipal services) and the device in the JP Voka - Snaga Ljubljana Regional Waste Management Center (RCERO). The treatment process in the first phase most often involves the cutting of mixed municipal solid waste, its homogenization and sieving in a sieve drum. This is followed by separation and extraction, where ferromagnetic metals are separated by magnetic separators. Aluminum and other nonmagnetic metals and light fractions, consisting mainly of plastic materials, are extracted by ballistic and optical separators or by turbulent vortices of air. Different types of recyclable plastic materials are extracted by mechanical separators that have built-in optical or spectroscopic recognition methods. The post-treatment residue is the so-called heavy fraction, which represents about 15% of the total initial mass flow of municipal waste.

The heavy fraction is a heterogeneous mixture of variable composition, consisting mainly of particles of hard plastic and plastic foils, glass, metals, construction waste and other household waste (bones and other food residues, ceramic particles, fabrics and wood). The fine-grained base of this waste includes organic matter and various mineral particles. The waste contains variable water content and has a characteristic odor of decomposing organic matter.

Worldwide, disposal by landfilling and incineration or co-incineration are the most commonly used waste management procedures for the heavy fraction. These disposal procedures represent a high financial burden for the holders of this waste and have a negative impact on the environment, for example due to emissions of greenhouse gases and other potentially hazardous substances resulting from incineration or decomposition of waste in landfills. However, such practices are unacceptable from the point of view of sustainable development as raw materials are lost through landfilling or incineration.

Various waste recycling processes from mixed municipal waste recovery operations have already described in existing patents and patent applications, such as melting waste into slag that can be used as an aggregate (JP2011246300A), gasification (JP2013180267A), microbiological recovery (EP30081931), pyrolisis and processing into a construction aggregate (JPS5595672A), microbiological processing - digestion and processing into bricks or light aggregates (EP3524699A1), etc. Patent US2003 041782A1, on the other hand, provides method only for the use of the plastic waste fraction, which accounts for only a part of the waste and fly ash for the production of an aggregate for use in construction.

In document WO2015/160313 the process for obtaining health and environmental acceptable construction materials from the contaminated soil is disclosed, said process using admixing the dispersion of Fe nanoparticles to the contaminated soil in the first step.

According to the description in this document, the construction composite and the manufacturing process for its production, which is the subject of the present invention, is closest to the patent and patent application JP4112667B2 (Solidifying material for fluidizing and refilling) and EP3524699A1 (construction materials comprising digestate). Nevertheless, the processes of recovery and recycling of waste from mixed municipal solid waste recovery processes in these documents are quite different as they mainly provide for the use of smaller shares of waste in finished products and describe recovery processes that are different in terms of implementation and use of additives. Patent JP4112667B2 provides method for the incineration of waste and the mixing of the ash obtained with gypsum and lime for the production of a composite for the construction of fills. Patent EP3524699A1 provides method for the recycling of the described waste after microbiological processing by a process of mixing with clay, followed by calcination. However, this process produces bricks, slabs or similar construction products.

### DESCRIPTION OF THE INVENTION

According to the recipe for this invention, the residue of the mixed municipal solid waste from mechanical treatment, also known as the heavy fraction, is recycled in an economical way, through the process of material recovery, into a construction composite. With the help of chemical reactions and physical mechanisms of immobilization of potentially hazardous substances, during the recovery process the heavy fraction is transformed into a material that is acceptable with regard to the environment and the health of humans and other living beeings.

More specifically, the object of the invention is the process for recycling of waste, in which the maximum content of the following potentially hazardous substances in the form of water-soluble compounds in the residue of mixed municipal waste after mechanical treatment (heavy fraction) is:
Cd ≤ 1.00 mg/kg in dry matter,
Crₜₒₜₐₗ ≤ 2.70 mg/kg in dry matter,
Cu ≤ 19.00 mg/kg in dry matter,
Hg ≤ 0.02 mg/kg in dry matter,
Mo ≤ 1.50 mg/kg in dry matter,
Ni ≤ 7.20 mg/kg in dry matter,
Pb ≤ 2.37 mg/kg in dry matter,
Sb ≤ 5.60 mg/kg in dry matter,
Se ≤ 0.15 mg/kg in dry matter,
Zn ≤ 23.00 mg/kg in dry matter,
Cl⁻ ≤ 11,000.00 mg/kg in dry matter,
F⁻ ≤ 17.20 mg/kg in dry matter, and
SO₄²⁻ ≤ 13.000.00 mg/kg in dry matter,
by conversion into a construction material acceptable for the environment and human health and health of other living beeings, i.e. a construction composite in which the content of the mentioned hazardous substances in the form of water-soluble compounds does not exceed the permissible values of:
   Cd ≤ 0.04 mg/kg in dry matter of construction material,
   Crₜₒₜₐₗ ≤ 0.50 mg/kg in dry matter of construction material,
   Cu ≤ 2.00 mg/kg in dry matter of construction material,
   Hg ≤ 0.01 mg/kg in dry matter of construction material,
   Mo ≤ 0.50 mg/kg in dry matter of construction material,
   Ni ≤ 0.40 mg/kg in dry matter of construction material,
   Pb ≤ 0.50 mg/kg in dry matter of construction material,
   Sb ≤ 0.06 mg/kg in dry matter of construction material,
   Se ≤ 0.10 mg/kg in dry matter of construction material,
   Zn ≤ 4.00 mg/kg in dry matter of construction material,
   Cl⁻ ≤ 800.00 mg/kg in dry matter of construction material,
   F⁻ ≤ 10.00 mg/kg in dry matter of construction material, and
   SO₄²⁻ ≤ 1,000.00 mg/kg in dry matter of construction material.

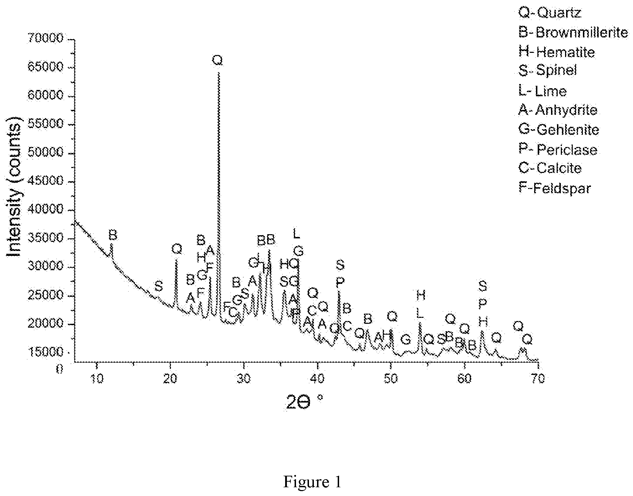

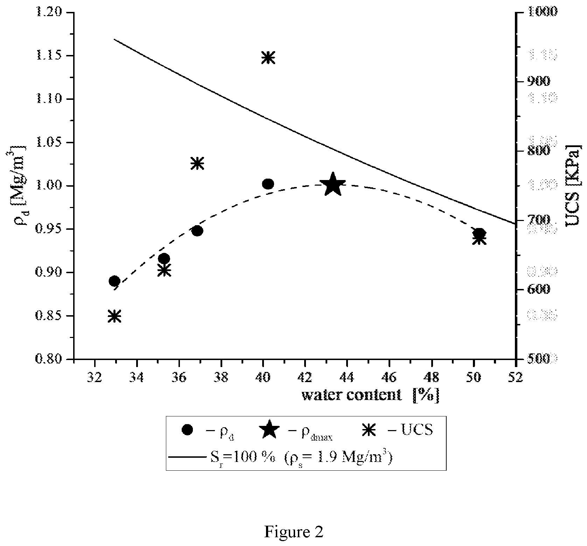

The invention is described below and presented in Figures 1 and 2:
Figure 1 shows the mineral composition of the suitable ash that can be used in the production of a construction composite.
Figure 2 shows the compaction curve of the construction composite from the standard Proctor test, which shows the relationship between the dry density of the composite (ρ_{d}) and its compressive strength (UCS) after 28 days.

The construction composite according to the invention includes (in dry weight) from 10 to 40 wt.% of the heavy fraction, from 60 to 90 wt.% of calcareous ash, and up to 20 wt.% of dried powdered natural clay or milled fine grained zeolite powder. Water is added to the construction composite in such an amount that the construction composite achieves such a consistency that, when installed, it achieves a density of at least 95% of the maximum reference dry density (ρ_{dmax}) according to the standard laboratory Proctor test (SIST EN 13286- 2: 2010 / AC: 2013). In this case, the construction composite after installation has adequate mechanical stability for the use in construction, and the content of hazardous substances in the form of water-soluble compounds after the installation of the construction composite does not exceed the above listed permissible values.

After preparation, the construction composite is installed by compaction using construction machinery in layers up to the maximum dry density in order to achieve effective chemical and physical immobilization of potentially hazardous substances in the construction composite.

The construction composite can be used for the construction of embankments and fills, covers and base layers and for all other geotechnical purposes, where it is possible to use a material with such properties. In doing so, the latest editions of standards for geotechnical planning and execution of earthworks must be taken into account.

The ash used in the process of producing the construction composite is calcareous fly ash collected as waste or a by-product on air pollution control filters (cyclone filters, electrostatic precipitators, bag filters) possibly from the combustion of coal or lignite or co-incineration of a small proportion of biomass. The biomass ash, paper ash or waste incineration ash with comparable properties to the ash which is suitable for use according to the invention, can also be used. It is also possible to use a mixture of several ashes or a mixture of ashes and conventional additives (lime, cement), in different dry weight ratios, provided that the prepared mixture meets the properties of suitable ash, which will be described below.

Preferentially, calcareous combustion ash is suitable for the preparation of the composite, but any of the above-described types of ashes may be used instead, provided that it meets the properties described here. Suitable ash is a fine-grained material containing at least 90 wt.% of particles smaller than 80 µm. Such ash consists mainly of aluminosilicate glass particles (up to 70 wt.% ) and crystalline particles, among which the following minerals predominate: brownmillerite Ca₂(Al, Fe)₂O₅, anhydrite CaSO₄, lime CaO, portlandite Ca(OH)₂, calcite CaCO₃, hematite Fe₂O₃, quartz SiO₂, melilite Ca₂(Al, Mg, Fe) (Al, Si (SiO₇)), mullite Al₆Si₂O₁₃, merwinite Ca₃Mg(SiO₄)₂, periclase MgO, tricalcium aluminate Ca₃Al₂O₆, gehlenite Ca₂Al(AlSiO₇), anortite Ca₂Al(AlSiO₇), akermanite Ca₂(Si₂O₇) and some other minerals. A spectrum of X-ray powder diffraction (XRD) analysis to determine the mineral composition of suitable ash is given in Figure 1. A small proportion of unburned and charred organic matter is also present in the ash. The main chemical components of calcareous fly ash are SiO₂, Al₂O₃, FeO, CaO, MgO and SO₃. The average calcareous fly ash from coal combustion according to the recipe of the present invention, which is suitable for the preparation of a construction composite, contains at least 23 wt.% of free CaO, at least 12 wt.% of reactive CaO and at least 13 wt.% of reactive SiO₂. Such calcareous fly ash from coal combustion is an alkaline material whose aqueous leachate has a pH> 12.5 and a relatively low content of potentially hazardous substances in the form of water-soluble compounds.

The example of suitable ash has the following contents of potentially hazardous substances in the form of water-soluble compounds:
As ≤ 0.1 mg/kg dry matter of ash,
Ba ≤ 153.20 mg/kg dry matter of ash,
Cd ≤ 0.04 mg/kg dry matter of ash,
Crₜₒₜₐₗ ≤ 0.5 mg/kg dry matter of ash,
Cu ≤ 0.5 mg/kg dry matter of ash,
Hg ≤ 0.01 mg/kg dry matter of ash,
Mo ≤ 0.5 mg/kg dry matter of ash,
Ni ≤ 0.01 mg/kg dry matter of ash,
Pb ≤ 0.5 mg/kg dry matter of ash,
Sb ≤ 0.01 mg/kg dry matter of ash,
Se ≤ 0.02 mg/kg dry matter of ash,
Zn ≤ 2.00 mg/kg dry matter of ash,
Cl⁻ ≤ 120.00 mg/kg dry matter of ash,
F⁻ ≤ 27.00 mg/kg dry matter of ash, and
SO₄²⁻ ≤ 1,000.00 mg/kg dry matter of ash.

Due to its high alkalinity, glassy phase content and free CaO content (more than 5 wt.%), such fly ash has latent hydraulic and pozzolanic properties and, in contact with water, forms hydration products similar to those produced by cement hydration.

Calcareous fly ash is used as an immobilizing additive in the construction composite of the present invention. In general, a rise in the pH value and the course of hydration reactions and pozzolanic reactions, which take place in the composite with the addition of calcareous coal fly ash in an optimal amount of water, help the processes of immobilization of potentially hazardous substances and the creation of a solid matrix within the construction composite obtained according to the procedure in this invention.

Specifically, the addition of water and ash to the heavy fraction in the construction composite triggers the following reaction mechanisms:
1) Upon contact between water and free CaO from the ash, the latter is partially hydrolyzed by an exothermic reaction, which leads to the heating of the composite, which further leads to the formation of portlandite Ca(OH)₂. Part of the free CaO and portlandite dissolves to form a strongly alkaline aqueous solution with free calcium ions Ca²⁺.
2) The influence of the dissolved alkalis from the ash results in the hydrolysis and dissolution of the aluminosilicate glassy phase, which represents the pozzolanic active substance in the ash.
3) The dissolved components of the pozzolans react with water and dissolved calcium to form hydration products.

In this reaction system, different products are formed in the construction composite, depending on the availability and concentration of chemical substances. When the components Ca and Al and Si are predominant in the pore solution, the C-A-S-H phase (calcium aluminate silicate hydrates) is formed. If Al is present as the main element together with Ca, the C-A-H phases (calcium aluminate hydrates) crystallize. In the presence of OH⁻ and CO₃²⁻, hemicarboaluminate or monocarboaluminate is formed. The presence of Cl⁻ ions from the heavy fraction leads to the formation of Friedl's salt. An excess of SO₄²⁻ ions, which originate from both the heavy fraction and the ash, causes the formation of monosulfoaluminate (Afm phase) in the system, and at increasing concentrations of Al and SO₄²⁻ the ettringite phase (Aft phase) is formed. Hydration products such as CSH and aluminate phases (hemi-carboaluminate, monocarboaluminate, hydrocalumite, monosulfoaluminate and ettringite) are most commonly formed in the composite with the addition of ash. The described newly formed mineral phases enable the binding and formation of a stable composite matrix and the chemical immobilization of potentially hazardous substances by incorporating them into their crystal structure.

More specifically, the mechanisms of immobilization of potentially hazardous substances with the addition of calcareous ash in the production of construction composites according to the recipe of this invention are divided into physical (microencapsulation in a bonded and low-permeability matrix that prevents leaching with water flow) and chemical (adsorption, ion exchange, oxidation / reduction, pH stabilization, incorporation into newly formed mineral phases). Most inorganic potentially hazardous substances are poorly mobile under alkaline conditions in a bound composite matrix with a high buffer capacity, provided by the calcareous ash. The main chemical mechanisms of immobilization are the formation of double calcium hydroxides, which are characteristic of the immobilization of As and Zn, for example, which form poorly soluble mineral phases CaZn₂(OH)₆, CaHAsO₄×H₂O or Ca₅(AsO₄)₃(OH). Cationic metals, such as Cd²⁺ or Pb²⁺, form poorly soluble hydroxides (Cd(OH)₂ and Pb(OH)₂) or are incorporated into the C-A-S-H structure, where they replace the Ca in the structure. Anion-forming elements, such as As (as AsO₄³⁻), Cr (as CrO₄²⁻), Mo (as MoO₄²⁻), Sb (as SbO₄³⁻), are incorporated into the mineral structure of the calcium aluminate minerals, etringite, monosulphate or monocarboaluminate, replacing or occupying the places of SO₄²⁻ or CO₃²⁻. Immobilization of Ba²⁺ and SO₄²⁻ in the composite is enabled by the formation of the poorly soluble barite mineral BaSO₄.

Preferably, natural or artificially enhanced bentonite clay or any other natural clay with the same properties, is suitable for the preparation of the composite. Suitable bentonite or natural clay is a mixture of minerals (minerals from the smectite group, e.g. montmorillonite (M⁺_{yx} nH₂O) (Al³⁺_{2-y}Mg²⁺_{y})Si⁴⁺₄O₁₀(OH)₂, kaolinite (Al₂(OH)₄Si₂O₅), illite, micas, chlorite (Fe⁺², Mg, Al, Fe⁺³)₆(Si, Al)₄O₁₀(OH, O)s), feldspars (KAlSisOs - NaAlSi₃O₈ - CaAl₂Si₂O₈), quartz (SiO₂), and Mn or Fe oxides). Due to isomorphic substitutions, Si⁴⁺ by Al³⁺ in the tetrahedral layer and Al³⁺ by Mg²⁺ in the octahedral layer, a negative surface charge is created on the entire surface of the clay minerals. The negative surface charge and high specific surface area allow the ion exchange and adsorption of metal cations (Pb²⁺, Cd²⁺, Zn²⁺) from the water-soluble fractions of potentially hazardous substances. The mechanism of specific adsorption is involved when cations bind directly to oxygen ligands in the tetrahedral or octahedral layer. Less efficient and reversible is the process of non-specific adsorption, which occurs by adsorption of hydrated cationic complexes on the surface of the tetrahedral layer, where precipitation of adsorbed contaminants can occur at an elevated pH. The cation adsorption processes are influenced by the pH of the composite, as they proceed more efficiently at alkaline pH values, when deprotonation of adsorption sites occurs.

Natural zeolites in the form suitable for use in the preparation of construction composites are zeolites, which are found around the world in the form of zeolite tuffs, in which the content of zeolites is up to 90 wt.%. They are most often composed of the following zeolite minerals: analcime NaAlSi₂O₆×H₂O, clinoptilolite (Na₂,K₂,Ca)₃Al₆Si₃₀O₇₂×21H₂O, heulandite (Ca,Na₂)₃Al₆Si₃₀O₇₂×21H₂O, mordenite (Ca,Na₂)AlₛSi₄₀O₉₆×28H₂O, chabasite (Ca,K₂,Na₂)₂Al₄Si₈O₂₄×12H₂O, phlilipsite K₂(Ca,Na₂,)₂Al₈Si₁₀O₃₂×12H₂O and some others. In addition to zeolite minerals, zeolite tuffs also contain quartz, clay minerals, amorphous glassy phase and some other minerals in quantities of less than 10 wt.%.

The crystalline lattice of zeolites is formed by SiO₄ and AlO₄ tetrahedra, which, by exchanging Si⁴⁺ with Al³⁺, create negatively charged surface sites that can be occupied by metal and alkali cations. The adsorption capacity of zeolites depends on the ratio (Si + Al) : O = 1 : 2 and Si : Al, where the number of aluminum atoms determines the number of positive charges of adsorbed cations. The crystalline lattice creates a network of connected channels - a mesoporous structure, with a pore size of about 0.4 to 0.7 nm. During the immobilization process, aqueous solutions with dissolved contaminants diffuse into these channels. These ions of contaminants from the pore solutions are then non-specifically adsorbed to free adsorption sites or exchanged with Na⁺, K⁺, Ca²⁺ or Mg²⁺ ions. The adsorption efficiency is strongly related to the pH value of the composite, as at low pH values the protonation of free adsorption sites takes place and metal cations are replaced by H⁺.

A mixture of calcareous ash and aluminosilicates from clays or zeolitic tuffs can induce the formation of pozzolanic reaction products after the addition of water in the construction composite. These products further stabilize and bind the composite and immobilize potentially hazardous substances. The components that lead to a pozzolanic reaction are the glassy phase from the zeolittic tuffs, soluble aluminosilicate minerals and a sufficiently high content of reactive free lime from the calcareous ash.

The heavy fraction has a specific and very heterogeneous composition and variable characteristics that cannot be completely controlled during the municipal solid waste treatment process. Therefore, its variable composition, which can vary significantly from batch to batch, must be taken into the account during processing.

From a technical point of view, the following rules for handling the heavy fraction must be taken into the account in the formulation and preparation of the construction composite according to the invention:
- In the recycling process the heavy fraction must be used as fresh as possible in order to prevent the biodegradation of the organic part of the material, which may alter its initial chemical and mechanical properties. The heavy fraction must be recycled within 7 days of the formation of the waste so that spontaneous combustion, odor emissions due to organic decomposition or leaching of contaminated water do not occur.
- The heavy fraction must be temporarily stored in a dry place before the start of processing - a ventilated storage or temporary depot, protected from precipitation (rain, snow, fog) so that water does not infiltrate the material and it is protected from pests (rodents, birds, and insects). The temporary depot must have an impermeable base at the bottom.
- Pieces and grains larger than 64 mm must be removed by sieving them using a mobile device (for example in a drum sieve), their size must be reduced in a mobile cutting machine and added to the remaining heavy fraction, and the heavy fraction mixed thoroughly and homogenized before use.
- It is necessary to regularly check the water content of the heavy fraction as it is necessary to adjust the optimal addition of water during the preparation of the construction composite.

From a technical point of view, the following rules must be observed for the handling of ash used in the production of the construction composite:
- The ash must be pumped directly from the storage silo at the combustion plant. Before the ash is used to produce the composite, it must not come into contact with water.
- The ash must be transported to the processing plant in a tank or in closed containers.
- At the site of the processing plant, the ash must be stored in a silo or in a temporary storage facility where it will not come into contact with water. The ash should be used to produce the construction composite within 7 days of delivery.
- When handling ash, measures must be taken to prevent dust emissions (for example by setting up a water aerosol).
- The weather conditions must be monitored if the recycling processes, i.e. the preparation and installation of construction composites, are carried out outdoors. In case of strong winds, frost and heavy precipitation, the process should be stopped to prevent negative impacts on the ash.
- The dosing of the ash into the mixing device for the construction composite must be carried out in accordance with a predetermined dry mass ratio via an automated dosing system using pumps.

From a technical point of view, the following rules for handling and dosing natural clay or zeolite used for the production of construction composites should be observed:
- A) Where naturally wet clay or crushed zeolite is used as an additive, it is pre-mechanically mixed with a heavy fraction (for example using a mixing bucket or optionally by building a temporary depot in layers where clay or crushed zeolite is alternately deposited between layers of the heavy fraction).
- B) If dried natural clay or zeolite powder is used as an additive, it is stored in closed silos, from which it is dosed automatically in the mixing device in the process of preparation of the composite in appropriate quantities, via a pump system.

As the construction composite must be installed at the installation site as soon as possible after preparation, it is necessary to properly prepare the installation site before starting the installation. The terrain must first be prepared at the place where the composite will be installed:
- Any plants, municipal solid waste and/or inert or non-hazardous construction waste on the site must be disposed of.
- The foundation ground at the installation site must be leveled and reinforced to achieve adequate load-bearing capacity. In measurements with a dynamic plate load deformation module, it must reach an average value of at least 30 MN/m², and in static deformation module measurements, an average value of at least 60 MN/m² must be achieved.

This is followed by the preparation of a temporary material depot, where moist clay or ground zeolite is alternately deposited between the heavy fraction layers.

Before starting the processing of the heavy fraction, i.e. before the preparation of the temporary depot, it is necessary to perform basic investigations to optimize the key parameters in the preparation of the construction composite:
- Samples of the homogenized heavy fraction must be taken from the temporary depot from a representative number of sampling points, depending on the size of the temporary depot.
- The water content of the heavy fraction must be determined on samples from the temporary depot.
- Depending on the used ratios between materials (heavy fraction, calcareous fly ash and clay or zeolite), the optimal parameters for the preparation and installation of the composite should be determined by laboratory testing using the standard Proctor test (SIST EN 13286-2: 2010 / AC: 2013). The compaction curve connecting the dry density (_{ρd}) determination points relative to the water content (Figure 2) determines the optimal water content (Wₒₚₜ) and the maximum dry density (ρ_{dmax}). The reference maximum dry density of the composite is in the range of 0.980 to 1.010 Mg/m³. The optimum water content for the described composite is in the range of 40 to 45%. The compressive strength (UCS) of such a composite after 28 days is approximately 750 to 900 kPa and is highest when the composite is prepared at optimum water content and compacted to maximum dry density (Figure 2).
   - Samples of the composite must be tested for leaching of potentially hazardous substances in accordance with the standardized procedure SIST EN 1744-3:2002, which confirms its acceptability for the environment.

Once the optimal parameters for the preparation and installation of the construction composite are confirmed by laboratory tests, i.e. the amount of individual components that make up the construction composite, the preparation the construction composite and its installation in the field can be started:
- Collecting heavy fraction samples from the temporary depot, e.g. with an excavator bucket so it is carried out vertically from the bottom up, or from the lower to the upper layers relative to the horizontal position of the layers where the temporary depot is arranged in layers, with moist clay or crushed zeolite being alternately deposited between the heavy fraction layers. This further ensures the homogenization of the material (heavy fractions and moist clay or milled fine grained zeolite) according to its composition and water content.
- Dosing the material into the closed mixing device and subsequent mixing, followed by the addition of an appropriate amount of calcareous fly ash and water into the heavy fraction material during mixing, according to predetermined parameters. The mixing device can be located at the installation site (in-situ) or at another location (ex-situ). If necessary, an appropriate amount of dried powdered natural clay or milled fine grained zeolite powder is added into the mixing device during mixing, according to predetermined parameters, to ensure that the composition of the composite is such that it contains from 10 to 40 wt.% of the heavy fraction, from 60 to 90 wt.% of calcareous fly ash and up to 20 wt.% of natural clay or zeolite and that the water content of the construction composite is as close as possible to the optimum value determined in the laboratory Proctor test (± 5% Wₒₚₜ).

Preferably, the mixing device consists of a closed mixing vessel into which the heavy fraction is dosed with an excavator, a silo for storing a stock of coal ash, a silo, if necessary, for storing dried powdered natural clay or milled fine grained zeolite powder and an automated mixing system with the possibility of accurate dosing of ash, optionally clay or zeolite powder and water. The mixing device ensures efficient mixing of the heavy fraction and ash in the appropriate mass ratio and proper dosing of water so that the final water content in the construction composite is optimal, as previously determined by the Proctor laboratory test.

The obtained construction composite is installed immediately after production or within no more than 4 hours and should not be stored.

The installation of the construction composite includes the following steps:
a) The composite is spread in layers up to 30 cm thick (d_{d} = 30 cm) at the installation site;
b) The layers of the composite are mechanically moistened by spraying water over the upper surface at the installation site in order to achieve the optimum water content before compaction. This is necessary because the water content of the composite decreases due to evaporation, due to exposure to solar heat and due to the heating of the composite resulting from the exothermic reaction upon the hydration of CaO;
c) Installation is done by compaction with rollers or by appropriate alternative geotechnical means. The density of the embedded layer averages at least ≥ 95% relative to the reference density (ρ_{dmax}) of the composite determined by the standard Proctor test (SIST EN 13286-2: 2010 / AC: 2013).

The composite cannot be installed in case of heavy rain or other precipitation and in case of a danger of negative water and frost impacts, which could cause the disintegration of the installed composite.

After 28 days, a sample is taken from the embedded layer and a chemical analysis of the aqueous leachate of the composite is carried out to confirm the environmental acceptability of the construction composite.

The installation and use of the construction composite according to the invention is possible for the purpose of building the cores of embankments landscaping earth structures, fills, foundation embankments and pipelines.

The built-in construction composite is not resistant to frost, so it must be installed under the zone of frost impact and must be covered with a frost-protective cover thicker than the maximum depth of frost penetration (d_{d}> FPD) or with a suitable other structure that prevents simultaneous negative effects of water action and frost.

## Claims

1. Construction composite from the residue of mixed municipal waste after mechanical treatment, where the residue of mixed municipal waste after mechanical treatment represents a heavy fraction with the highest content of hazardous substances in the form of water-soluble compounds in dry matter of the heavy fraction:
Cd ≤ 1.00 mg/kg, Crₜₒₜₐₗ ≤ 2.70 mg/kg, Cu ≤ 19.00 mg/kg, Hg ≤ 0.02 mg/kg, Mo ≤ 1.50 mg/kg, Ni ≤ 7.20 mg/kg, Pb ≤ 2.37 mg/kg, Sb ≤ 5.60 mg/kg, Se ≤ 0.15 mg/kg, Zn ≤ 23.00 mg/kg, Cl⁻ ≤ 11,000.00 mg/kg, F⁻ ≤ 17.20 mg/kg and SO₄²⁻ ≤ 13,000.00 mg/kg, **characterized in that** its dry weight fractions are from 10 to 40 wt.% of heavy fraction, from 60 to 90 wt.% of ash, up to 20 wt.% of natural clay or zeolite, and water, which is added to the construction composite in such an amount that the construction composite reaches such consistency that when installed by layered compaction it achieves a density of at least 95% of the maximum reference dry density (ρ_{dmax}) according to the laboratory standard Proctor test, and the content of hazardous substances in the form of water-soluble compounds in the dry matter of the construction composite after installation is as follows:
Cd ≤ 0.04 mg/kg, Total ≤ 0.50 mg/kg, Cu ≤ 2.00 mg/kg, Hg ≤ 0.01 mg/kg, Mo ≤ 0.50 mg/kg, Ni ≤ 0.40 mg/kg, Pb ≤ 0.50 mg/kg, Sb ≤ 0.06 mg/kg, Se ≤ 0.10 mg/kg, Zn ≤ 4.00 mg/kg, Cl⁻ ≤ 800.00 mg/kg, F⁻ ≤ 10.00 mg/kg and SO₄²⁻ 1,000.00 mg/kg.

2. Construction composite according to Claim 1, **characterized in that** the ash suitable for its production is selected from calcareous fly ashes, ashes from biomass incineration, paper ashes, ashes from waste incineration and ashes mixed with conventional additives such as lime and/or cement, in various dry weight ratios or mixtures thereof, the ash containing at least 23 wt.% of free CaO, at least 12 wt.% of reactive CaO and at least 13 wt.% of reactive SiO₂ containing at least 90 wt.% of ash particles less than 80 µm, the aqueous extract has a pH> 12.5 and the content of hazardous substances in the form of water-soluble compounds in the dry matter of ash is as follows: As ≤ 0.1 mg/kg, Ba ≤ 153.20 mg/kg, Cd ≤ 0.04 mg/kg, Crₜₒₜₐₗ ≤ 0.5 mg/kg, Cu ≤ 0.5 mg/kg, Hg ≤ 0.01 mg/kg, Mo ≤ 0.5 mg/kg, Ni ≤ 0.01 mg/kg, Pb ≤ 0.5 mg/kg, Sb ≤ 0.01 mg/kg, Se ≤ 0.02 mg/kg, Zn ≤ 2.00 mg/kg, Cl⁻ ≤ 120.00 mg/kg, F⁻ ≤ 27.00 mg/kg and SO₄²⁻ 1,000.00 mg/kg.

3. Construction composite according to Claims 1 and 2, **characterized in that** the fly ash is calcareous fly ash containing at least 23 wt.% of free CaO, at least 12 wt.% of reactive CaO and at least 13 wt.% of reactive SiO₂ containing at least 90% of particles smaller than 80 µm, has the aqueous leachate with a pH> 12.5 and the content of hazardous substances in the form of water-soluble compounds in the dry matter of ash is as follows: As ≤ 0.1 mg/kg, Ba ≤ 153.20 mg/kg, Cd ≤ 0.04 mg/kg, Crₜₒₜₐₗ ≤ 0.5 mg/kg, Cu ≤ 0.5 mg/kg, Hg ≤ 0.01 mg/kg, Mo ≤ 0.5 mg/kg, Ni ≤ 0.01 mg/kg, Pb ≤ 0.5 mg/kg, Sb ≤ 0.01 mg/kg, Se ≤ 0.02 mg/kg, Zn ≤ 2.00 mg/kg, Cl⁻ ≤ 120.00 mg/kg, F⁻ ≤ 27.00 mg/kg and SO₄²- 1,000.00 mg/kg.

4. Construction composite according to Claims 1 to 3, **characterized in that** the clay is bentonite clay and / or dried powdered natural clay.

5. Construction composite according to Claims 1 to 4, **characterized in that** the natural zeolites are in the form of milled fine grained powdered zeolite tuffs, in which the zeolite content is up to 90% wt.%.

6. Construction composite according to Claims 1 to 5, **characterized in that** the maximum dry density of the composite is in the range from 0.980 to 1.010 Mg/m³, the water content in the range from 40 to 45% and compressive strength 28 days after installation is in the range between 750 and 900 kPa.

7. A method of manufacturing a construction composite according to claims 1 to 6, **characterized in that** it includes the following steps:
- preparation of the heavy fraction so that the heavy fraction contains particles smaller than 64 mm, and water content determination on the samples of the heavy fraction;
- determination of the optimum water content (Wₒₚₜ) and maximum dry density (ρ_{dmax}) by the standard Proctor test on a sample of the heavy fraction, ash and clay or zeolite used, and based on this determination of the quantities of the heavy fraction, ash, dried powdered natural clay or milled fine grained zeolite powder and water;
- determination of the content of potentially hazardous substances in the leachate on the sample of the used heavy fraction, ash and clay or zeolite;
- collection of material from the temporary depot in such a way that the removal is carried out in a vertical direction from the bottom up, thus further ensuring the homogenization of the material and where the material includes heavy fraction and moist natural clay or crushed zeolite;
- dosing the material into the mixing device and mixing, adding an appropriate amount of ash and water to the material during mixing, according to predetermined parameters, to ensure that the composition of the composite is such that it contains from 10 to 40 wt.% of the heavy fraction, 60 to 90 wt.% ash and up to 20 wt.% of dried powdered natural clay or milled fine grained zeolite powder and that the water content of the construction composite is as close as possible to the optimum value determined by the laboratory Proctor test (± 5% Wₒₚₜ).

8. The method according to Claim 7, **characterized in that** an appropriate amount of dried natural clay or zeolite powder is dispensed into the mixing device during mixing, according to predetermined parameters, in order to ensure that the composition of the composite is such that it contains from 10 to 40 wt.% of the heavy fraction, from 60 to 90 wt.% of ash and up to 20 wt.% of dried powdered natural clay or milled fine grained zeolite powder, and that the water content of the construction composite is as close as possible to the optimum value determined by the laboratory Proctor test (± 5% Wₒₚₜ).

9. The method according to Claims 7 and 8, **characterized in that** the ash is selected from calcareous fly ash, ash from biomass incineration, paper ash, ash from waste incineration and ash with conventional additives such as lime and/or cement, in various dry weight ratios or mixtures thereof, with the ash containing at least 23 wt.% of free CaO, at least 12 wt.% of reactive CaO and at least 13 wt.% of reactive SiO₂, containing at least 90 wt.% of ash particles smaller than 80 µm, the aqueous leachate has a pH> 12,5 and the content of hazardous substances in the form of water-soluble compounds in the dry matter of ash is as follows:
As ≤ 0.1 mg/kg, Ba ≤ 153.20 mg/kg, Cd ≤ 0.04 mg/kg, Crₜₒₜₐₗ ≤ 0.5 mg/kg, Cu ≤ 0.5 mg/kg, Hg ≤ 0.01 mg/kg, Mo ≤ 0.5 mg/kg, Ni ≤ 0.01 mg/kg, Pb ≤ 0.5 mg/kg, Sb ≤ 0.01 mg/kg, Se ≤ 0.02 mg/kg, Zn ≤ 2.00 mg/kg, Cl⁻ ≤ 120.00 mg/kg, F⁻ ≤ 27.00 mg/kg and SO₄²⁻ 1,000.00 mg/kg.

10. The method according to Claims 7 and 8, **characterized in that** the fly ash is calcareous fly ash containing at least 23 wt.% of free CaO, at least 12 wt.% of reactive CaO and at least 13 wt.% of reactive SiO₂, containing at least 90% of particles smaller than 80 µm, has the aqueous leachate of a pH> 12.5 and the content of hazardous substances in the form of water-soluble compounds in the dry matter of ash is as follows:
As ≤ 0.1 mg/kg, Ba ≤ 153.20 mg/kg, Cd ≤ 0.04 mg/kg, Crₜₒₜₐₗ ≤ 0.5 mg/kg, Cu ≤ 0.5 mg/kg, Hg ≤ 0.01 mg/kg, Mo ≤ 0.5 mg/kg, Ni ≤ 0.01 mg/kg, Pb ≤ 0.5 mg/kg, Sb ≤ 0.01 mg/kg, Se ≤ 0.02 mg/kg, Zn ≤ 2.00 mg/kg, Cl⁻ ≤ 120.00 mg/kg, F⁻ ≤ 27.00 mg/kg and SO₄²⁻ 1,000.00 mg/kg.

11. The method according to Claims 7 to 10, **characterized in that** the clay is bentonite clay.

12. The method according to Claims 7 to 10, **characterized in that** the natural zeolites are in the form of zeolite tuffs, in which the zeolite content is up to 90 wt.%

13. A method of installing a construction composite according to claims 1 to 6, wherein the method of installation includes the following steps:
- preparation of the terrain where the construction composite will be installed;
- spreading of the composite at the installation site in layers up to 30 cm thick;
- mechanical wetting of the upper surface of the composite layer to ensure optimal water content before compaction as the water content in the composite decreases continuously during installation due to evaporation;
- compaction with rollers or by appropriate geotechnical means so that the density of the embedded layer averages at least ≥ 95% relative to the reference density (ρ_{dmax}) of the composite determined by the standard Proctor test.

## Patentansprüche

1. Bauverbundwerkstoff aus dem Rückstand von gemischtem Siedlungsabfall nach mechanischer Behandlung, wobei der Rückstand von gemischtem Siedlungsabfall nach mechanischer Behandlung eine Schwerfraktion mit dem höchsten Gehalt an gefährlichen Substanzen in Form von wasserlöslichen Verbindungen in der Trockenmasse der Schwerfraktion darstellt:
Cd ≤ 1,00 mg/kg, Crₜₒₜₐₗ ≤ 2,70 mg/kg, Cu ≤ 19,00 mg/kg, Hg ≤ 0,02 mg/kg, Mo ≤ 1,50 mg/kg, Ni ≤ 7,20 mg/kg, Pb ≤ 2,37 mg/kg, Sb ≤ 5,60 mg/kg, Se ≤ 0,15 mg/kg, Zn ≤ 23,00 mg/kg, Cl⁻ ≤ 11.000,00 mg/kg, F⁻ ≤ 17,20 mg/kg und SO₄²⁻ ≤ 13.000,00 mg/kg, **dadurch gekennzeichnet, dass** seine Trockengewichtsanteile 10 bis 40 Gew.-% Schwerfraktion, 60 bis 90 Gew.-% Asche, bis zu 20 Gew.-% natürlichen Ton oder Zeolith und Wasser umfassen, das dem Bauverbundwerkstoff in einer solchen Menge zugesetzt wird, dass der Bauverbundwerkstoff eine solche Konsistenz erreicht, dass er beim Einbau durch eine schichtweise Verdichtung eine Verdichtung von mindestens 95% der maximalen Referenz-Trockendichte (ρ_{dmax}) gemäß dem Laborstandard-Proctor-Test erreicht, und der Gehalt an Gefahrstoffen in Form von wasserlöslichen Verbindungen in der Trockenmasse des Bauverbundwerkstoffs nach dem Einbau, wie folgt ist:
Cd ≤ 0,04 mg/kg, Total ≤ 0,50 mg/kg, Cu ≤ 2,00 mg/kg, Hg ≤ 0,01 mg/kg, Mo ≤ 0,50 mg/kg, Ni ≤ 0,40 mg/kg, Pb ≤ 0,50 mg/kg, Sb ≤ 0,06 mg/kg, Se ≤ 0,10 mg/kg, Zn ≤ 4,00 mg/kg, Cl⁻ ≤ 800,00 mg/kg, F⁻ ≤ 10,00 mg/kg und SO₄²⁻ 1.000,00 mg/kg.

2. Bauverbundwerkstoff nach Anspruch 1, **dadurch gekennzeichnet, dass** die zur Herstellung geeignete Asche ausgewählt ist aus kalkhaltigen Flugaschen, Aschen aus der Biomasseverbrennung, Papieraschen, Aschen aus Abfallverbrennung und Asche, gemischt mit herkömmlichen Additiven, wie Kalk und/oder Zement, in verschiedenen Trockengewichtsverhältnissen oder Mischungen davon, wobei die Asche mindestens 23 Gew.-% freies CaO, mindestens 12 Gew.-% reaktives CaO und mindestens 13 Gew.-% reaktives SiO₂, das mindestens 90 Gew.-% Aschepartikel von weniger als 80 µm enthält, aufweist, wobei der wässrige Extrakt einen pH-Wert > 12,5 aufweist und der Gehalt an Gefahrstoffen in Form von wasserlöslichen Verbindungen in der Trockenmasse der Asche wie folgt ist As ≤ 0,1 mg/kg, Ba ≤ 153,20 mg/kg, Cd ≤ 0,04 mg/kg, Crₜₒₜₐₗ ≤ 0,5 mg/kg, Cu ≤ 0,5 mg/kg, Hg ≤ 0,01 mg/kg, Mo ≤ 0,5 mg/kg, Ni ≤ 0,01 mg/kg, Pb ≤ 0,5 mg/kg, Sb ≤ 0,01 mg/kg, Se ≤ 0,02 mg/kg, Zn ≤ 2,00 mg/kg, Cl⁻≤ 120,00 mg/kg, F⁻ ≤ 27,00 mg/kg und SO₄²⁻ 1.000,00 mg/kg.

3. Bauverbundwerkstoff nach Ansprüchen 1 und 2, **dadurch gekennzeichnet, dass** die Flugasche kalkhaltige Flugasche ist, die mindestens 23 Gew.-% freies CaO, mindestens 12 Gew.-% reaktives CaO und mindestens 13 Gew.-% reaktives SiO₂, das mindestens 90 % Partikel kleiner als 80 µm enthält, das wässrige Sickerwasser mit einem pH-Wert > 12,5 aufweist und der Gehalt an gefährlichen Stoffen in Form von wasserlöslichen Verbindungen in der Trockenmasse der Asche wie folgt ist:
As ≤ 0,1 mg/kg, Ba ≤ 153,20 mg/kg, Cd ≤ 0,04 mg/kg, Crₜₒₜₐₗ ≤ 0,5 mg/kg, Cu ≤ 0,5 mg/kg, Hg ≤ 0,01 mg/kg, Mo ≤ 0,5 mg/kg, Ni ≤ 0,01 mg/kg, Pb ≤ 0,5 mg/kg, Sb ≤ 0,01 mg/kg, Se ≤ 0,02 mg/kg, Zn ≤ 2,00 mg/kg, Cl⁻ ≤ 120,00 mg/kg, F⁻ ≤ 27,00 mg/kg und SO₄²⁻ 1.000,00 mg/kg.

4. Bauverbundwerkstoff nach den Ansprüchen 1 bis 3, **dadurch gekennzeichnet, dass** der Ton Bentonit-Ton und/oder getrockneter pulverförmiger Naturton ist.

5. Bauverbundwerkstoff nach den Ansprüchen 1 bis 4, **dadurch gekennzeichnet, dass** die natürlichen Zeolithe als gemahlene, feinkörnige, pulverförmige Zeolith-Tuffe vorliegen, in denen der Zeolithgehalt bis zu 90 Gew.-% beträgt.

6. Bauverbundwerkstoff nach den Ansprüchen 1 bis 5, **dadurch gekennzeichnet, dass** die maximale Trockendichte des Verbundes im Bereich von 0,980 bis 1,010 Mg/m₃ liegt, der Wassergehalt im Bereich von 40 bis 45% und die Druckfestigkeit 28 Tage nach dem Einbau im Bereich zwischen 750 und 900 kPa liegt.

7. Verfahren zur Herstellung eines Bauverbundwerkstoffs nach den Ansprüchen 1 bis 6, **dadurch gekennzeichnet, dass** es die folgenden Schritte umfasst:
- Aufbereitung der Schwerfraktion, so dass die Schwerfraktion Partikel enthält, die kleiner als 64 mm sind, und Bestimmung des Wassergehalts an den Proben der Schwerfraktion;
- Bestimmung des optimalen Wassergehalts (Wₒₚₜ) und der maximalen Trockendichte (ρ_{dmax}) durch den Standard-Proctor-Test an einer Probe der verwendeten Schwerfraktion, der Asche und des Ton oder des Zeoliths, und auf dieser Grundlage, Bestimmung der Mengen der Schwerfraktion, der Asche, des getrockneten pulverförmigen natürlichen Tons oder des gemahlenen feinkörnigen Zeolithpulvers und des Wassers;
- Bestimmung des Gehalts potenziell gefährlicher Substanzen im Sickerwasser anhand der Probe der verwendeten Schwerfraktion, Asche und Ton oder Zeolith;
- Sammeln von Material aus dem temporären Depot derart, dass die Entnahme in vertikaler Richtung von unten nach oben erfolgt, wodurch die Homogenisierung des Materials weiter gewährleistet wird und wobei das Material eine Schwerfraktion und feuchten natürlichen Ton oder zerkleinerten Zeolith umfasst;
- Dosierung des Materials in die Mischvorrichtung und Mischen, Zugabe einer angemessenen Menge an Asche und Wasser zum Material während des Mischens nach vorgegebenen Parametern, um sicherzustellen, dass die Zusammensetzung des Verbundstoffs so ist, dass sie 10 bis 40 Gew.-% der Schwerfraktion, 60 bis 90 Gew.-% Asche und bis zu 20 Gew.-% getrockneten pulverförmigen Naturton oder gemahlenes feinkörniges Zeolithpulver enthält und dass der Wassergehalt des Bauverbundwerkstoffs so nah wie möglich an dem durch den Labor-Proctor-Test bestimmten optimalen Wert liegt (± 5% Wₒₚₜ).

8. Verfahren nach Anspruch 7, **dadurch gekennzeichnet, dass** während des Mischens eine entsprechende Menge an getrocknetem Naturton oder Zeolithpulver nach den vorgegeben Parametern in die Mischvorrichtung abgegeben wird, um sicherzustellen, dass die Zusammensetzung des Verbunds derart ist, dass er 10 bis 40 Gew.-% der Schwerfraktion, 60 bis 90 Gew.-% Asche und bis zu 20 Gew.-% getrockneten, pulverförmigen Naturton oder gemahlenes feinkörniges Zeolithpulver enthält, und dass der Wassergehalt des Bauverbundwerkstoffs möglichst nahe an dem durch den Labor-Proctor-Test bestimmten optimalen Wert liegt (± 5% Wₒₚₜ).

9. Verfahren nach den Ansprüchen 7 und 8, **dadurch gekennzeichnet, dass** die Asche ausgewählt ist aus kalkhaltiger Flugasche, Asche aus der Biomasseverbrennung, Papierasche, Asche aus der Abfallverbrennung und Asche mit herkömmlichen Additiven, wie Kalk und/oder Zement, in verschiedenen Trockengewichtsverhältnissen oder Mischungen davon, wobei die Asche mindestens 23 Gew.-% freies CaO, mindestens 12 Gew.-% reaktives CaO und mindestens 13 Gew.-% reaktives SiO₂, das mindestens 90 Gew.-% Aschepartikel von kleiner als 80 µm enthält, aufweist, wobei das wässrige Sickerwasser einen pH-Wert > 12,5 aufweist und der Gehalt an Gefahrstoffen in Form von wasserlöslichen Verbindungen in der Trockenmasse der Asche wie folgt ist
As ≤ 0,1 mg/kg, Ba ≤ 153,20 mg/kg, Cd ≤ 0,04 mg/kg, Crₜₒₜₐₗ ≤ 0,5 mg/kg, Cu ≤ 0,5 mg/kg, Hg ≤ 0,01 mg/kg, Mo ≤ 0,5 mg/kg, Ni ≤ 0,01 mg/kg, Pb ≤ 0,5 mg/kg, Sb ≤ 0,01 mg/kg, Se ≤ 0,02 mg/kg, Zn ≤ 2,00 mg/kg, Cl⁻ ≤ 120,00 mg/kg, F⁻ ≤ 27,00 mg/kg und SO₄²⁻ 1.000,00 mg/kg.

10. Verfahren nach den Ansprüchen 7 und 8, **dadurch gekennzeichnet, dass** die Flugasche kalkhaltige Flugasche ist, die mindestens 23 Gew.-% freies CaO, mindestens 12 Gew.-% reaktives CaO und mindestens 13 Gew.-% reaktives SiO₂ aufweist, das mindestens 90 % Partikel kleiner als 80 µm enthält, das wässrige Sickerwasser einem pH > 12,5 aufweist und der Gehalt an gefährlichen Stoffen in Form von wasserlöslichen Verbindungen in der Trockenmasse der Asche wie folgt ist:
As ≤ 0,1 mg/kg, Ba ≤ 153,20 mg/kg, Cd ≤ 0,04 mg/kg, Crₜₒₜₐₗ ≤ 0,5 mg/kg, Cu ≤ 0,5 mg/kg, Hg ≤ 0,01 mg/kg, Mo ≤ 0,5 mg/kg, Ni ≤ 0,01 mg/kg, Pb ≤ 0,5 mg/kg, Sb ≤ 0,01 mg/kg, Se ≤ 0,02 mg/kg, Zn ≤ 2,00 mg/kg, Cl⁻ ≤ 120,00 mg/kg, F⁻ ≤ 27,00 mg/kg und SO₄²⁻ 1.000,00 mg/kg.

11. Verfahren nach den Ansprüchen 7 bis 10, **dadurch gekennzeichnet, dass** der Ton Bentonit-Ton ist.

12. Verfahren nach den Ansprüchen 7 bis 10, **dadurch gekennzeichnet, dass** die natürlichen Zeolithe in Form von Zeolith-Tuffen vorliegen, in denen der Zeolithgehalt bis zu 90 Gew.-% beträgt.

13. Verfahren zum Einbau eines Bauverbundwerkstoffs nach den Ansprüchen 1 bis 6, wobei das Einbauverfahren die folgenden Schritte umfasst:
- Vorbereitung des Geländes, auf dem der Bauverbundwerkstoff eingebaut werden soll;
- Verteilen des Verbundwerkstoffs an der Montagestelle in bis zu 30 cm dicken Schichten;
- mechanische Befeuchtung der Oberseite der Verbundschicht, um einen optimalen Wassergehalt vor der Verdichtung sicherzustellen, da der Wassergehalt im Verbundwerkstoff während dem Einbau durch Verdunstung kontinuierlich abnimmt;
- Verdichtung mit Walzen oder durch geeignete geotechnische Mittel, so dass die Dichte der eingebetteten Schicht mindestens > 95% in Bezug auf die durch den Standard-Proctor-Test ermittelte Referenzdichte (ρ_{dmax}) des Verbundwerkstoffs beträgt.

## Revendications

1. Composite de construction obtenu à partir de résidu de déchets municipaux mélangés après traitement mécanique, où le résidu de déchets municipaux mélangés après traitement mécanique représente une fraction lourde ayant la teneur la plus élevée en substances dangereuses sous la forme de composés hydrosolubles en matière sèche de la fraction lourde :
Cd ≤ 1,00 mg/kg, Crₜₒₜₐₗ ≤ 2,70 mg/kg, Cu ≤ 19,00 mg/kg, Hg ≤ 0,02 mg/kg, Mo ≤ 1,50 mg/kg, Ni ≤ 7,20 mg/kg, Pb ≤ 2,37 mg/kg, Sb ≤ 5,60 mg/kg, Se ≤ 0,15 mg/kg, Zn ≤ 23,00 mg/kg, Cl⁻ ≤ 11 000,00 mg/kg, F⁻ ≤ 17,20 mg/kg et SO₄²⁻ ≤ 13 000,00 mg/kg, **caractérisé en ce que** ses fractions de poids sec sont de 10 à 40 % en poids de fraction lourde, de 60 à 90 % en poids de cendres, jusqu'à 20 % en poids d'argile naturelle ou de zéolite, et d'eau, qui est ajoutée au composite de construction en une quantité telle que le composite de construction atteigne une consistance telle que lorsqu'elle est installée par compactage en couches, elle atteint une densité d'au moins 95 % de la densité sèche de référence maximale (ρ_{dmax}) selon le test Proctor standard de laboratoire, et la teneur en substances dangereuses sous la forme de composés solubles dans l'eau dans la matière sèche du composite de construction après installation est comme suit :
Cd ≤ 0,04 mg/kg, Total ≤ 0,50 mg/kg, Cu ≤ 2,00 mg/kg, Hg ≤ 0,01 mg/kg, Mo ≤ 0,50 mg/kg, Ni ≤ 0,40 mg/kg, Pb ≤ 0,50 mg/kg, Sb ≤ 0,06 mg/kg, Se ≤ 0,10 mg/kg, Zn ≤ 4,00 mg/kg, Cl⁻ ≤ 800,00 mg/kg, F⁻ ≤ 10,00 mg/kg et SO₄²⁻ 1 000,00 mg/kg.

2. Composite de construction selon la revendication 1, **caractérisé en ce que** les cendres appropriées pour sa production sont choisies parmi les cendres volantes calcaires, les cendres issues de l'incinération de biomasse, les cendres de papier, des cendres provenant d'incinération de déchets et de cendres mélangées avec des additifs classiques tels que de la chaux et/ou du ciment, dans divers rapports en poids sec ou des mélanges de ceux-ci, les cendres contenant au moins 23 % en poids de CaO libre, au moins 12 % en poids de CaO réactif et au moins 13 % en poids de SiO₂ réactif contenant au moins 90 % en poids de particules de cendres de moins de 80 µm, l'extrait aqueux a un pH > 12,5 et la teneur en substances dangereuses sous la forme de composés hydrosolubles dans la matière sèche de cendres est la suivante : As ≤ 0,1 mg/kg, Ba ≤ 153,20 mg/kg, Cd ≤ 0,04 mg/kg, Crₜₒₜₐₗ ≤ 0,5 mg/kg, Cu ≤ 0,5 mg/kg, Hg ≤ 0,01 mg/kg, Mo ≤ 0,5 mg/kg, Ni ≤ 0,01 mg/kg, Pb ≤ 0,5 mg/kg, Sb ≤ 0,01 mg/kg, Se ≤ 0,02 mg/kg, Zn ≤ 2,00 mg/kg, Cl⁻ ≤ 120,00 mg/kg, F⁻ ≤ 27,00 mg/kg et SO₄²⁻ 1 000,00 mg/kg.

3. Composite de construction selon les revendications 1 et 2, **caractérisé en ce que** les cendres volantes sont des cendres volantes calcaires contenant au moins 23 % en poids de CaO libre, au moins 12 % en poids de CaO réactif et au moins 13 % en poids de SiO₂ réactif contenant au moins 90 % de particules inférieures à 80 µm, a le lixiviat aqueux avec un pH > 12,5 et la teneur en substances dangereuses sous la forme de composés solubles dans l'eau dans la matière sèche de cendres est comme suit :
As ≤ 0,1 mg/kg, Ba ≤ 153,20 mg/kg, Cd ≤ 0,04 mg/kg, Crₜₒₜₐₗ ≤ 0,5 mg/kg, Cu ≤ 0,5 mg/kg, Hg ≤ 0,01 mg/kg, Mo ≤ 0,5 mg/kg, Ni ≤ 0,01 mg/kg, Pb ≤ 0,5 mg/kg, Sb ≤ 0,01 mg/kg, Se ≤ 0,02 mg/kg, Zn ≤ 2,00 mg/kg, Cl⁻ ≤ 120,00 mg/kg, F⁻ ≤ 27,00 mg/kg et SO₄²⁻ 1 000,00 mg/kg.

4. Composite de construction selon les revendications 1 à 3, **caractérisé en ce que** l'argile est de l'argile de bentonite et/ou de l'argile naturelle en poudre séchée.

5. Composite de construction selon les revendications 1 à 4, **caractérisé en ce que** les zéolites naturelles se présentent sous la forme de revers de zéolite en poudre à grains fins broyés, dans lesquels la teneur en zéolite va jusqu'à 90 % en poids.

6. Composite de construction selon les revendications 1 à 5, **caractérisé en ce que** la densité sèche maximale du composite est dans la plage de 0,980 à 1,010 Mg/m³, la teneur en eau dans la plage de 40 à 45 % et la résistance à la compression 28 jours après installation est dans la plage entre 750 et 900 kPa.

7. Procédé de fabrication d'un composite de construction selon les revendications 1 à 6, **caractérisé en ce qu'**il comprend les étapes suivantes :
- la préparation de la fraction lourde de sorte que la fraction lourde contient des particules inférieures à 64 mm, et la détermination de la teneur en eau sur les échantillons de la fraction lourde ;
- la détermination de la teneur en eau optimale (Wₒₚₜ) et de la densité sèche maximale (ρ_{dmax}) par le test Proctor standard sur un échantillon de la fraction lourde, de la cendre et de l'argile ou de la zéolite utilisée, et sur cette base la détermination des quantités de la fraction lourde, de la cendre, de l'argile naturelle en poudre séchée ou de la poudre de zéolite à grains fins broyée et de l'eau ;
- la détermination de la teneur en substances potentiellement dangereuses dans le lixiviat sur l'échantillon de la fraction lourde, de la cendre et de l'argile ou de la zéolite utilisée ;
- la collecte de matériau à partir du dépôt temporaire de telle manière que le retrait est effectué dans une direction verticale depuis le bas vers le haut, assurant ainsi en outre l'homogénéisation du matériau et où le matériau comprend une fraction lourde et de l'argile naturelle humide ou de la zéolite broyée ;
- le dosage du matériau dans le dispositif de mélange et le mélange, l'ajout d'une quantité appropriée de cendre et d'eau au matériau pendant le mélange, selon des paramètres prédéterminés, afin d'assurer que la composition du composite est telle qu'elle contient de 10 à 40 % en poids de la fraction lourde, de 60 à 90 % en poids de cendres et jusqu'à 20 % en poids d'argile naturelle en poudre séchée ou de poudre de zéolite à grains fins broyée et **en ce que** la teneur en eau du composite de construction est aussi proche que possible de la valeur optimale déterminée par le test Proctor de laboratoire (± 5 % Wₒₚₜ).

8. Procédé selon la revendication 7, **caractérisé en ce qu'**une quantité appropriée d'argile naturelle séchée ou de poudre de zéolite est distribuée dans le dispositif de mélange pendant le mélange, selon des paramètres prédéterminés, pour assurer que la composition du composite est telle qu'elle contient de 10 à 40 % en poids de la fraction lourde, de 60 à 90 % en poids de cendres et jusqu'à 20 % en poids d'argile naturelle en poudre séchée ou de poudre de zéolite à grains fins broyée et **en ce que** la teneur en eau du composite de construction est aussi proche que possible de la valeur optimale déterminée par le test Proctor de laboratoire (± 5 % Wₒₚₜ).

9. Procédé selon les revendications 7 et 8, **caractérisé en ce que** les cendres sont choisies parmi des cendres volantes calcaires, des cendres issues de l'incinération de biomasse, des cendres de papier, des cendres provenant d'incinération de déchets et des cendres avec des additifs classiques tels que de la chaux et/ou du ciment, dans divers rapports en poids sec ou des mélanges de ceux-ci, les cendres contenant au moins 23 % en poids de CaO libre, au moins 12 % en poids de CaO réactif et au moins 13 % en poids de SiO₂ réactif contenant au moins 90 % en poids de particules de cendres plus petites que 80 µm, le lixiviat aqueux a un pH > 12,5 et la teneur en substances dangereuses sous la forme de composés hydrosolubles dans la matière sèche de cendres est la suivante :
As ≤ 0,1 mg/kg, Ba ≤ 153,20 mg/kg, Cd ≤ 0,04 mg/kg, Crₜₒₜₐₗ ≤ 0,5 mg/kg, Cu ≤ 0,5 mg/kg, Hg ≤ 0,01 mg/kg, Mo ≤ 0,5 mg/kg, Ni ≤ 0,01 mg/kg, Pb ≤ 0,5 mg/kg, Sb ≤ 0,01 mg/kg, Se ≤ 0,02 mg/kg, Zn ≤ 2,00 mg/kg, Cl⁻ ≤ 120,00 mg/kg, F⁻ ≤ 27,00 mg/kg et SO₄²⁻ 1 000,00 mg/kg.

10. Procédé selon les revendications 7 et 8, **caractérisé en ce que** les cendres volantes sont des cendres volantes calcaires contenant au moins 23 % en poids de CaO libre, au moins 12 % en poids de CaO réactif et au moins 13 % en poids de SiO₂ réactif contenant au moins 90 % de particules inférieures à 80 µm, a le lixiviat aqueux avec un pH > 12,5 et la teneur en substances dangereuses sous la forme de composés solubles dans l'eau dans la matière sèche de cendres est comme suit :
As ≤ 0,1 mg/kg, Ba ≤ 153,20 mg/kg, Cd ≤ 0,04 mg/kg, Crₜₒₜₐₗ ≤ 0,5 mg/kg, Cu ≤ 0,5 mg/kg, Hg ≤ 0,01 mg/kg, Mo ≤ 0,5 mg/kg, Ni ≤ 0,01 mg/kg, Pb ≤ 0,5 mg/kg, Sb ≤ 0,01 mg/kg, Se ≤ 0,02 mg/kg, Zn ≤ 2,00 mg/kg, Cl⁻ ≤ 120,00 mg/kg, F⁻ ≤ 27,00 mg/kg et SO₄²⁻ 1 000,00 mg/kg.

11. Procédé selon les revendications 7 à 10, **caractérisé en ce que** l'argile est de l'argile de bentonite.

12. Procédé selon les revendications 7 à 10, **caractérisé en ce que** les zéolites naturelles se présentent sous la forme de revers de zéolite, dans lesquels la teneur en zéolite va jusqu'à 90 % en poids.

13. Procédé d'installation d'un composite de construction selon les revendications 1 à 6, le procédé d'installation comprenant les étapes suivantes :
- la préparation du terrain où le composite de construction sera installé ;
- l'étalement du composite au niveau du site d'installation en couches jusqu'à 30 cm d'épaisseur ;
- le mouillage mécanique de la surface supérieure de la couche de composite pour assurer une teneur en eau optimale avant le compactage à mesure que la teneur en eau dans le composite diminue en continu pendant l'installation en raison de l'évaporation ;
- le compactage avec des rouleaux ou par des moyens géotechniques appropriés de sorte que la densité de la couche incorporée moyenne au moins > 95 % par rapport à la densité de référence (ρ_{dmax}) du composite déterminé par le test Proctor standard.
